# EUROPÄISCHE PATENTSCHRIFT

(11) **EP 3 859 572 B1**
(45) Veröffentlichungstag und Bekanntmachung des Hinweises auf die Patenterteilung: **06.03.2024**
(21) Anmeldenummer: 21153456.5
(22) Anmeldetag: 26.01.2021
(51) Int. Cl.: G06F 21/16, G06T 1/00, H04N 1/32

(54) **VERFAHREN ZUR SICHTBARMACHUNG VON SICHERHEITSINFORMATIONEN EINES DIGITAL GESPEICHERTEN BILDES UND BILDWIEDERGABEGERÄT ZUR AUSFÜHRUNG EINES SOLCHEN VERFAHRENS**
METHOD FOR DISPLAYING SECURITY INFORMATION OF A DIGITALLY STORED IMAGE AND IMAGE REPRODUCTION DEVICE FOR CARRYING OUT SUCH A METHOD
PROCÉDÉ DE VISUALISATION DES INFORMATION DE SÉCURITÉ D'UNE IMAGE SAUVEGARDÉ DE MANIÈRE NUMÉRIQUE DISPOSITIF DE REPRODUCTION DES IMAGES DESTINÉ À LA MISE EN UVRE D'UN TEL PROCÉDÉ

(30) Priorität: 28.01.2020 DE 102020000512
(43) Veröffentlichungstag der Anmeldung: 04.08.2021
(73) Patentinhaber: Mühlbauer GmbH & Co. KG, 93426 Roding (DE)
(72) Erfinder: Bergmann, Dr. Mike, 01069 Dresden (DE)
(74) Vertreter: Schmidt, Steffen J.

(56) Entgegenhaltungen:
- WO-A1-2004/015617
- US-A1- 2012 154 581
- US-A1- 2017 236 006

## Beschreibung

### Hintergrund

Hier werden ein Verfahren und eine Vorrichtung zur Sichtbarmachung von Sicherheitsinformationen eines digital gespeicherten Bildes offenbart. Merkmale und Details des Verfahrens und der Vorrichtung sind auch die Patentansprüche sowie durch diese Beschreibung und die Figuren offenbart.

Sicherheitsdokumente wie zum Beispiel Ausweise oder Sichteinlagen für Sicherheitsdokumente werden mit Sicherheitselementen ausgestattet, die optisch wahrnehmbare Sicherheitsmerkmale aufweisen, zum Beispiel Hologramme oder nur unter Beleuchtung mit Licht einer bestimmten Wellenlänge (zum Beispiel UV-Licht) sichtbare Symbole. Diese Sicherheitselemente können mit bloßem Auge, mit Hilfsmitteln wie Lupen oder Vergrößerungsgläsern oder - im Falle von "versteckten" Sicherheitselementen, mit Hilfe von Spezialwissen verifizierbar sein.

Im Falle der Verwendung von digital gespeicherten (Ausweis-)Bildern, zum Beispiel für eine Ausweisfunktion eines Smartphones, eines persönlichen digitalen Assistenten (PDA) oder eines Handhelds, können spezielle Sicherheitsbilder gespeichert werden, die neben einer Vielzahl von Bildpunkten ("Pixel") mit jeweils zugeordneten Farbwerten auch eine zusätzliche digital codierte Sicherheitsinformation aufweisen. Diese digital codierte Sicherheitsinformation kann zum Beispiel einen Namen, ein Geburtsdatum oder sonstige personenbezogene Informationen einer mit dem gespeicherten Sicherheitsbild gezeigten bzw. abgebildeten Person umfassen und ist meist nicht sichtbar dargestellt. Durch einen automatisierten oder manuellen Abgleich der digital codierten Sicherheitsinformation mit zum Beispiel in einer Datenbank gespeicherten Kontrolldaten kann eine Integrität bzw. eine Echtheit des digital gespeicherten (Ausweis-)Bildes überprüft werden. Ferner kann eine unbefugte Replikation des digital gespeicherten (Ausweis-)Bildes durch einen Abgleich der digital codierten Sicherheitsinformationen ermittelt werden, da zum Beispiel eine Kopie oder Abfotographie des digital gespeicherten (Ausweis-)Bildes zwar möglicherweise eine identische Wiedergabe der Bildpunkte, jedoch nicht die (nicht optisch wahrnehmbar dargestellte) digital codierte Sicherheitsinformation beinhalten kann.

Das Auslesen und der Abgleich der digital codierten Sicherheitsinformation erfolgt üblicherweise durch speziell hierfür vorgesehene Kontrollgeräte und/oder mit einer speziell hierfür eingerichteten Software. Ferner ist üblicherweise eine Netzwerkanbindung zu einer Datenbank mit hinterlegten Kontrolldaten notwendig. Jedoch sind solche speziellen Geräte, zum Beispiel für kleinere Einzelhändler, sehr teuer und Netzwerkanbindungen, zum Beispiel im ländlichen Raum, nicht flächendeckend verfügbar. Auch eine Netzwerkanbindung mittels Funktechnologie kann, zum Beispiel in geschlossenen Verkaufsräumen, problematisch sein.

Gerade für kleinere Einzelhändler wie zum Beispiel Kiosk- oder Trinkhallenbetreiber ergibt sich jedoch im alltäglichen Geschäftsbetrieb regelmäßig die Notwendigkeit eine Identität und/oder Identitätsmerkmale wie zum Beispiel das Alter einer Person festzustellen, zum Beispiel bei der Abgabe von tabak- oder alkoholhaltigen Genussmitteln. Hierbei wäre es vorteilhaft - trotz mangelnder Netzwerkanbindung und ohne spezielle Auslesegeräte - einen vorgezeigten digitalen Ausweis und/oder ein digital gespeichertes Bild zumindest auf das Vorhandensein plausibler Sicherheitsmerkmale hin zu überprüfen.

Verschiedene Applikationen für Smartphones, darunter die Anzeige von Markern auf dem Display eines Smartphones, welche für das Vorhandensein von für das menschliche Auge aufgrund der Ortsfrequenzfilterung nicht wahrnehmbaren Bildinformationen anzeigen, werden durch das Dokument US 2017/0236006 A1 offenbart.

Ferner offenbart das Dokument US 2012/0154581 A1 verschieden Bildbearbeitungsverfahren, darunter auch die Berechnung eines Komplementärfarbwertes für einen Ausgangsfarbwert.

### Technische Aufgabe

Somit ergibt sich die technische Aufgabe, ein Verfahren und eine Vorrichtung bereit zu stellen, welche jeweils die Sichtbarmachung von Sicherheitsinformationen eines digital gespeicherten (Ausweis-)Bildes ermöglichen, wobei hierzu keine Netzwerkanbindung und keine über ein Anzeigegerät (z.B. ein Smartphone) des (Ausweis-)Bildes hinausgehende bzw. zusätzliche technische Vorrichtungen notwendig sein sollen.

### Stand der Technik

Das Dokument WO 2018/045326 A1 offenbart ein Verfahren zur Sichtbarmachung von einer Person zugeordneten Daten für eine digitale Ausweisfunktion auf einem Smartphone, wobei die digitale Ausweisfunktion auch die Anzeige eines digital gespeicherten Bildes umfasst.

Das Dokument US 103 312 91 B1 betrifft ebenfalls ein digitales Ausweisverfahren bzw. einen digitalen Ausweis, welche/r jedoch eine Anbindung an einen ID-Server benötigt.

Somit besteht trotz vorhandener Verfahren und Vorrichtungen weiterhin Bedarf an einer Lösung für die gestellte technische Aufgabe.

### Lösung, Ausgestaltungen und Weiterbildungen

Die gestellte technische Aufgabe wird durch ein Verfahren nach dem Anspruch 1 sowie eine Vorrichtung nach dem nebengeordneten Anspruch gelöst. Vorteilhafte Ausgestaltungen werden durch die weiteren Ansprüche definiert.

Ein Verfahren zur Sichtbarmachung von Sicherheitsinformationen eines digital gespeicherten Bildes, welches mehrere Bildpunkte und zumindest eine digital codierte Sicherheitsinformation aufweist, umfasst zumindest die folgenden Schritte:
- Zuordnen zumindest eines Teils der Bildpunkte zu zumindest einem Bildbereich;
- Ermitteln eines Farbmittelwertes der dem Bildbereich zugeordneten Bildpunkte;
- Ermitteln von zwei zueinander komplementären Farbwerten, deren Farbmittelwert mit dem ermittelten Farbmittelwert der dem Bildbereich zugeordneten Bildpunkte zumindest annähernd identisch ist; und
- Optisch wahrnehmbares Darstellen des Bildbereichs und zumindest eines Teils der digital codierten Sicherheitsinformation.

Der dargestellte Bildbereich weist hierbei einen ersten der zueinander komplementären Farbwerte auf. Der Teil der digital codierten Sicherheitsinformation wird innerhalb des Bildbereichs dargestellt und weist einen zweiten der zueinander komplementären Farbwerte auf.

Ein Bildbereich im Sinne dieser Offenbarung bezeichnet einen zweidimensionalen (Teil-) Bereich bzw. Teil eines zweidimensionalen Bildes oder einen dreidimensionalen (Teil-) Bereich bzw. Teil eines dreidimensionalen Bildes. Wird mehr als ein Bildpunkt einem Bildbereich zugeordnet, so ist es eine Voraussetzung für diese Zuordnung, dass jeder der einem bestimmten Bildbereich zugeordneten Bildpunkte an zumindest einen weiteren der diesem bestimmten Bildbereich zugeordneten bzw. zuzuordnenden Bildpunkte angrenzt. Zwei Bildpunkte grenzen dann aneinander an, wenn sie innerhalb des Bildes in einer beliebigen Raumdimension benachbart zueinander angeordnet sind und sich kein weiterer Bildpunkt des Bildes zwischen den benachbart zueinander angeordneten Bildpunkten befindet. In einer Variante kann ein Bildbereich auch identisch mit einem (Gesamt-) Bild sein, sodass alle Bildpunkte eines Bildes einem einzigen Bildbereich zugeordnet sind.

Ein Farbwert im Sinne dieser Offenbarung bezeichnet einen Wert auf einer Farbskala, zum Beispiel der RAL-Skala, der RGB-Skala, der YMC-Skala oder einer softwarespezifischen Farbskala, der einem spezifischen Farbton zugeordnet ist. Jeder Bildpunkt eines digital gespeicherten Bildes weist einen, insbesondere als ganzzahligen Zahlenwert angebbaren, Farbwert auf, der den Farbton des Bildpunktes identifiziert.

Ein Farbmittelwert im Sinne dieser Offenbarung ist ein Farbwert, der dem arithmetischen Mittelwert der zu mittelnden Farbwerte entsprechen kann. Weist die Farbskala ausschließlich ganzzahlige Farbwerte auf, so kann der Farbmittelwert im Falle eines nicht ganzzahligen arithmetischen Mittelwertes von zu mittelnden Farbwerten durch Aufrunden oder durch Abrunden des arithmetischen Mittelwerts der zu mittelnden Farbwerte ermittelt werden.

Zwei Farbwerte können, abhängig von der verwendeten Farbskala, zum Beispiel dann zueinander komplementär sein, wenn die Addition ihrer Farbwerte einem Maximalwert der verwendeten Farbskala entspricht.

Zwei Farbwerte sind dann annähernd identisch, wenn sie voneinander lediglich um einen Farbwert auf einer Farbskala abweichen. Bei der Verwendung bestimmter Farbskalen kann es vorkommen, dass die Forderung von zwei Farbwerten, welche zueinander komplementär sein und hierbei einem vorbestimmten Farbmittelwert entsprechen sollen, nicht, zumindest nicht arithmetisch exakt, erfüllbar ist. Im Sinne dieser Offenbarung wird der Begriff "annähernd identische Farbwerte" daher als "Farbwerte, die sich maximal um einen (ganzzahligen) Wert auf einer verwendeten Farbskala voneinander unterscheiden" definiert.

Optional kann das Verfahren zur Sichtbarmachung von Sicherheitsinformationen eines digital gespeicherten Bildes, welches mehrere Bildpunkte und zumindest eine digital codierte Sicherheitsinformation aufweist, zumindest einen der folgenden Schritte umfassen:
- Optisch wahrnehmbares Darstellen des digital gespeicherten Bildes mit einem Bildwiedergabegerät; und/oder
- Veranlassen der Sichtbarmachung von Sicherheitsinformationen durch einen Bediener des Bildwiedergabegerätes, insbesondre mittels einer Interaktion des Bedieners mit dem Bildwiedergabegerät; und/oder
- Vergrößertes Darstellen eines Teils des digital gespeicherten Bildes.

Ein Vorteil des offenbarten Verfahrens zur Sichtbarmachung von Sicherheitsinformationen eines digital gespeicherten Bildes, welches mehrere Bildpunkte und zumindest eine digital codierte Sicherheitsinformation aufweist, ist, dass hierzu keine Netzwerkanbindung und/oder kein zusätzliches Gerät benötigt werden. Es genügt vielmehr, dass digital gespeicherte Bild mit einem Bildwiedergabegerät, zum Beispiel mit einem Smartphone, einem persönlichen digitalen Assistenten (PDA) oder einem Handheld darzustellen. Zur Überprüfung der Sicherheitsmerkmale kann, zum Beispiel veranlasst durch eine Geste und/oder eine Tastenbedienung eines Nutzers bzw. Bedieners des Bildwiedergabegeräts, die digital codierte Sicherheitsinformation oder ein Teil derselben innerhalb des Bildes bzw. innerhalb eines oder mehrerer Bereiche des Bildes sichtbar gemacht bzw. eingeblendet werden. Mit anderen Worten kann beschrieben werden, dass das mit dem Bildwiedergabegerät wiedergegebene digital gespeicherte Bild in Reaktion auf eine Interaktion des Bedieners des Bildwiedergabegerätes so verändert werden kann, dass eine in dem digital gespeicherten Bild enthaltene Sicherheitsinformation für einen Betrachter des Bildes sichtbar wird. Um einzelne Bildbereiche genauer betrachten zu können, kann optional ein Teil des digital gespeicherten Bildes vergrößert dargestellt werden. Die vergrößerte Darstellung des Teils des Bildes kann ebenfalls durch einen Bediener des Bildwiedergabegerätes veranlasst werden.

Optional kann zumindest ein Teil der digital codierten Sicherheitsinformation als optisch wahrnehmbarer Buchstabe und/oder als optisch wahrnehmbare Ziffer dargestellt/angezeigt werden. Ferner kann zumindest ein Teil der digital codierten Sicherheitsinformation als optisch wahrnehmbares Symbolbild und/oder als optisch wahrnehmbares Piktogramm dargestellt werden.

Ein Darstellen einer Sicherheitsinformation in einem Bildbereich definiert eine für einen Betrachter/Bediener des Bildes wahrnehmbare Wiedergabe bzw. Anzeige der Sicherheitsinformation durch einen Teil der Bildpunkte, welche zuvor dem Bildbereich zugeordnet wurden. Mit anderen Worten kann beschrieben werden, dass ein Teil der Bildpunkte, welche zuvor dem Bildbereich zugeordnet wurden, nun zur optisch wahrnehmbaren Darstellung/Anzeige eines Teils der Sicherheitsinformation verwendet werden, wobei zumindest der Teil der Bildpunkte des Bildbereiches, welche nicht zur Wiedergabe eines Teils der Sicherheitsinformation verwendet werden, nun den ersten der zueinander komplementären Farbwerte aufweist. Der dargestellte Teil der Sicherheitsinformation zeichnet sich hierdurch optisch Wahrnehmbar innerhalb des Bildbereiches ab.

In einer Variante kann ein Symbolbild, welches ein Teil der digital codierten Sicherheitsinformation sein kann, zum Beispiel ein verkleinertes Abbild des digital gespeicherten (Gesamt-) Bildes sein. In diesem Fall kann das verkleinerte Abbild des (Gesamt-)Bildes in dem Bildbereich als Teil der Sicherheitsinformation optisch wahrnehmbar dargestellt werden, wobei das verkleinerte Gesamtbild zumindest teilweise den zweiten der zwei zueinander komplementären Farbwerte aufweist.

Optional kann jeder Bildpunkt eines digital gespeicherten Bildes einem Bildbereich zugeordnet werden. Weiter müssen den Bildbereichen nicht zwingend dieselbe Anzahl von Bildpunkten zugeordnet werden. Ferner können manche Bildpunkte auch mehreren Bildbereichen zugeordnet werden. In einer anderen Variante können die Bildpunkte jeweils nur einem einzigen Bildbereich zugeordnet werden, sodass die Zuordnung der Bildpunkte zu einem jeweiligen Bildbereich eineindeutig ist.

Einem Bildbereich können zum Beispiel jeweils 10, 100 oder 1000 Bildpunkte zugeordnet werden. Insbesondere kann ein Bildbereich auch ein beliebiges ganzzahliges Vielfaches der vorgenannten Beispiele für die Anzahl der Bildpunkte aufweisen. Zum Beispiel kann zumindest ein Teil der Bildbereiche eine Längenausdehnung aufweisen, die jeweils zumindest annähernd identisch (+/- 1 Bildpunkt) mit der Breitenausdehnung der jeweiligen Bildbereiche ist. Ein Bildbereich eines zweidimensionalen Bildes kann zum Beispiel 10 x 10 oder 100 x 100 Bildpunkte aufweisen, wobei jeder der Bildpunkte zumindest an einen weiteren Bildpunkt des Bildbereiches angrenzt. Mit anderen Worten kann beschrieben werden, dass ein zweidimensionaler Bildbereich die Umrisse eines Quadrats oder Rechtecks aufweisen kann.

In einer Variante kann eine Sicherheitsinformation, welche eine Textinformation bzw. Buchstaben und/oder Ziffern und/oder Symbole beinhaltet so dargestellt werden, dass jeweils ein Buchstabe oder eine Ziffer oder ein Symbol der Sicherheitsinformation in einem von mehreren Bildbereichen dargestellt wird, sodass sich bei der - ggf. vergrößerten - Darstellung der mehreren Bildbereiche eine lesbare bzw. optisch wahrnehmbare Textinformation für den Betrachter der Bildbereiche ergibt.

In einer Variante können hierbei, insbesondere im Falle einer weiter vergrößerten Darstellung einzelner oder mehrerer Bildbereiche, geschlossene Buchstaben und/oder Ziffern und/oder Symbole, insbesondere 0, O, D, Q, Ö und/oder @, durch ein verkleinertes Abbild des digital gespeicherten (Gesamt-)Bildes ersetzt werden. Hierdurch wird eine, insbesondere unbefugte, Manipulation des digital gespeicherten Bildes weiter erschwert.

In einer Weiterbildung kann das Verfahren zumindest einen der folgenden Schritte aufweisen:
- Zuordnen zumindest eines Teils der Bildpunkte zu einem Signaturbildbereich;
- Ermitteln eines Signatur- oder Linienverlaufs innerhalb des Signaturbildbereichs; und/oder
- Optisch wahrnehmbares Darstellen des Signaturbildbereichs und zumindest eines Teils der digital codierten Sicherheitsinformation innerhalb des Signaturbildbereichs. Der innerhalb des Signaturbildbereichs dargestellte Teil der digital codierten Sicherheitsinformation kann mehrere optisch wahrnehmbare Buchstaben und/oder Ziffern und/oder Piktogramme und/oder Symbolbilder aufweisen. Die mehreren optisch wahrnehmbaren Buchstaben und/oder Ziffern und/oder Piktogramme und/oder Symbolbilder können innerhalb des Signaturbildbereichs dem Signatur- oder Linienverlauf folgend angeordnet werden.

Ein "Signatur- oder Linienverlauf" ist hierbei als der (quasi-) kontinuierliche Verlauf bzw. die Ausbreitungsrichtung einer in dem Signaturbildbereich dargestellten (Signatur-) Linie definiert. Mit anderen Worten kann beschrieben werden, dass eine Zeichen- oder Symbolfolge, welche einem Signatur- oder Linienverlauf folgend angeordnet ist, den Verlauf bzw. die (zweidimensionale) Ausformung einer (Signatur-) Linie nachbildet.

Optional kann das Zuordnen der Bildpunkte zu dem Signaturbildbereich eine Kontrastanalyse des digital gespeicherten Bildes umfassen. Durch das Ermitteln eines Kontrastverlaufes kann bestimmt werden, welcher Teil eines Bildes dem Signaturbildbereich zuzuordnen ist. Insbesondere kann eine schwarze oder nahezu schwarze Linie (bzw. Folge von aneinander angrenzenden Bildpunkten) vor einem weißen oder nahezu weißen Hintergrund dem Signaturbildbereich zugeordnet werden.

Ferner kann das Ermitteln des Signatur- oder Linienverlaufs eine Kontrastanalyse des Signaturbildbereichs umfassen.

Optional kann der innerhalb des Signaturbildbereichs dargestellte Teil der Sicherheitsinformation einen Farbwert aufweisen, der komplementär zu einem Farbwert einer innerhalb des Signaturbildbereichs dargestellten Signatur und/oder Fingerabdruckdarstellung ist.

In einer Variante kann der innerhalb des Signaturbildbereichs dargestellte Teil der Sicherheitsinformation eine innerhalb des Signaturbildbereichs dargestellte Signatur und/oder Fingerabdruckdarstellung überlagern. Mit anderen Worten kann beschrieben werden, dass zumindest ein Teil der digital codierten Sicherheitsinformation innerhalb des Signaturbildbereiches den Signatur- oder Linienverlauf teilweise überdeckt/überlagert. Insbesondere können mehrere optisch wahrnehmbare Buchstaben und/oder Ziffern und/oder Piktogramme und/oder Symbolbilder mit Bildpunkten dargestellt werden, die eine (Signatur-) Linie optisch wahrnehmbar überlagern/überdecken. Zum Beispiel kann sich ein Teil der digital codierten Sicherheitsinformation als Buchstaben- oder Ziffernfolge mit gegenüber den (Signatur-) Linien komplementären Farbwerten optisch wahrnehmbar abzeichnen, wobei der Verlauf der Buchstaben- oder Ziffernfolge den Verlauf der (Signatur-) Linie zumindest teilweise überlagert.

In einer alternativen oder ergänzenden Weiterbildung des Verfahrens kann zumindest ein Teil der digital codierten Sicherheitsinformation in einem Informationsbildbereich angezeigt werden. Der innerhalb des Informationsbildbereichs dargestellte Teil der digital codierten Sicherheitsinformation kann mehrere optisch wahrnehmbare Buchstaben und/oder Ziffern und/oder Piktogramme und/oder Symbolbilder aufweisen.

Der Informationsbildbereich kann als Teil des digital gespeicherten Bildes oder auch zusätzlich/neben dem dargestellten digital gespeicherten Bild optisch wahrnehmbar angezeigt/dargestellt bzw. sichtbar gemacht werden. Zum Beispiel kann der Informationsbildbereich eine Darstellung des digital gespeicherten Bildes umrahmen.

Optional können der Informationsbildbereich und/oder der innerhalb des Informationsbildbereichs dargestellte Teil der digital codierten Sicherheitsinformation mehrere Farbwerte, insbesondere zueinander paarweise komplementäre Farbwerte, aufweisen.

Ferner kann der innerhalb des Informationsbildbereichs dargestellte Teil der digital codierten Sicherheitsinformation zeitabhängig und/oder bedienerveranlasst verändert werden. Insbesondere können die Farbwerte des Informationsbildbereichs und/oder des innerhalb des Informationsbildbereichs dargestellten Teils der digital codierten Sicherheitsinformation zeitabhängig und/oder bedienerveranlasst verändert werden.

In einer Variante kann der innerhalb des Informationsbildbereichs dargestellte Teil der digital codierten Sicherheitsinformation als sich quasi-endlos wiederholende Abfolge von Buchstaben, Ziffern, Piktogrammen und/oder Symbolbildern sichtbar gemacht bzw. angezeigt/dargestellt werden, wobei sich die Abfolge aus der Perspektive eines Betrachters oder Bedieners des Wiedergabegerätes durch den Informationsbildbereich bewegt bzw. umläuft. Die sich quasi-endlos wiederholende Abfolge der Buchstaben, Ziffern, Piktogramme und/oder Symbolbilder kann hierbei von einem Bediener des Wiedergabegerätes verlangsamt, angehalten oder beschleunigt werden. Ferner können die Farbwerte des Informationsbildbereichs und/oder des innerhalb des Informationsbildbereichs dargestellten Teils der digital codierten Sicherheitsinformation abhängig oder unabhängig von dem dargestellten Teil der digital codierten Sicherheitsinformation und/oder von einer Bedienerinteraktion mit dem Wiedergabegerät verändert werden.

Optional kann die Darstellung von Buchstaben, Zeichen, Piktogrammen, Symbolen und/oder Bildern analog zum Informationsbildbereich auch im Signaturbildbereich und/oder in zumindest einem oder mehreren Bildbereichen zeitabhängig und/oder bedienerveranlasst verändert werden. Ferner kann vorgesehen sein, dass für den Signaturbildbereich und/oder für zumindest einen oder mehrere Bildbereiche eine zeitabhängige und/oder bedienerveranlasste Änderung eines Hintergrundfarbwertes möglich oder nicht möglich ist.

Die digital codierte Sicherheitsinformation kann zum Beispiel ein Geburtsdatum, eine Adresse und/oder weitere personenbezogene Informationen/Merkmale wie Geschlecht, Größe, Haarfarbe, Augenfarbe enthalten. Ferner kann die digital codierte Sicherheitsinformation Hinweise umfassen, die Auskunft über besondere Befugnisse einer durch das digital gespeicherte Bild gezeigten Person erteilen.

Ferner kann die digital codierte Sicherheitsinformation, insbesondere der in dem zumindest einen Bildbereich und/oder der in dem Signaturbildbereich und/oder der in dem Informationsbildbereich dargestellte Teil der Sicherheitsinformation, eine, insbesondere aktuelle, Zeitinformation umfassen. Zum Beispiel können das aktuelle Datum und/oder die aktuelle Uhrzeit in dem zumindest einen Bildbereich und/oder in dem Signaturbildbereich und/oder in dem Informationsbildbereich dargestellt werden.

Ein Vorteil hierbei ist, dass eine durch Abfilmen oder eine auf sonstige unbefugte Weise reproduzierte Wiedergabe einer in der Vergangenheit dargestellten digital codierten Sicherheitsinformation leicht identifizierbar ist. Das Wiedergabegerät kann hierzu eine entsprechende Zeitbestimmungseinheit aufweisen bzw. zur Bestimmung des aktuellen Datums und/oder der aktuellen Uhrzeit eingerichtet sein.

In einer Variante können sowohl für den Signaturbildbereich als auch für den Informationsbildbereich, insbesondere im Falle einer vergrößerten Darstellung des Signaturbildbereichs und/oder des Informationsbildbereichs und/oder eines Teils des Signaturbildbereichs und/oder eines Teils des Informationsbildbereichs, geschlossene Buchstaben und/oder Ziffern und/oder Symbole, insbesondere 0, 0, D, Q, Ö und/oder @, durch ein verkleinertes Abbild des digital gespeicherten (Gesamt-)Bildes ersetzt werden. Hierdurch wird eine, insbesondere unbefugte, Manipulation des digital gespeicherten Bildes weiter erschwert.

Ein hier offenbartes Bildwiedergabegerät, ist dazu ausgebildet und eingerichtet ein digital gespeichertes Bild, welches mehrere Bildpunkte und zumindest eine digital codierte Sicherheitsinformation aufweist, für einen Bediener optisch wahrnehmbar wiederzugeben und zumindest einen Teil der digital codierten Sicherheitsinformation unter Verwendung eines hier offenbarten Verfahrens für einen Bediener optisch wahrnehmbar wiederzugeben.

### Figuren

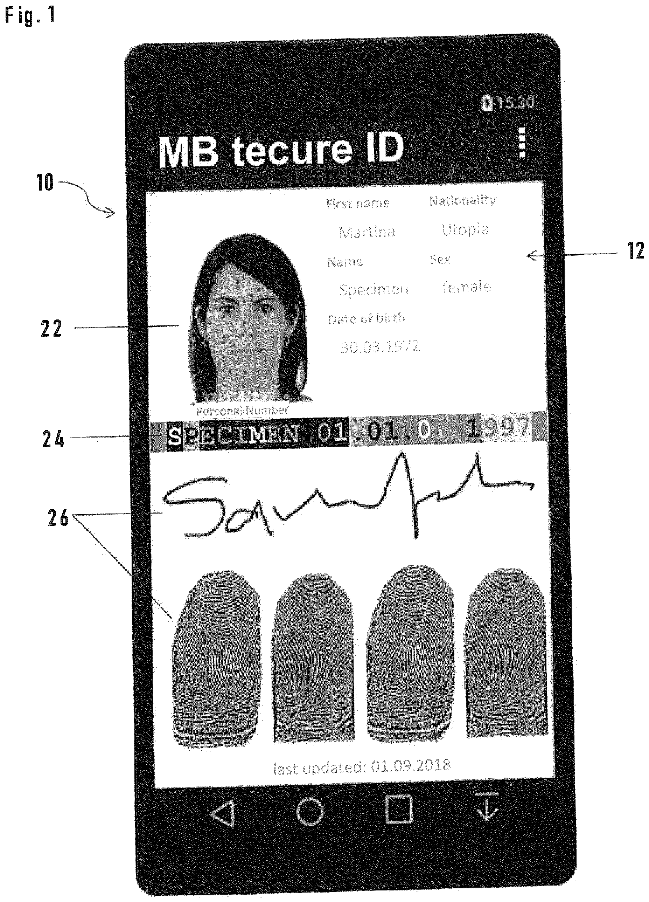

Die Figuren 1 bis 5 dienen zum besseren Verständnis der vorangehend beschriebenen Verfahren sowie der vorangehend beschriebenen Vorrichtung und zeigen jeweils Beispiele für diese.

Obwohl die Figuren lediglich schematisch und nicht maßstäblich Beispiele für die offenbarten Gegenstände zeigen, sind die im Folgenden beschriebenen und durch die Figuren gezeigten Merkmale Teil der Offenbarung und können mit den Merkmalen der Ansprüche, der vorangehend beschriebenen Verfahren sowie der vorangehend beschriebenen Vorrichtung kombiniert werden.
- Figur 1: zeigt schematisch ein Beispiel für ein Bildwiedergabegerät, welches ein digital gespeichertes Bild mit mehreren Bildpunkten und einer digital codierten Sicherheitsinformation optisch wahrnehmbar darstellt.
- Figur 2: zeigt schematisch ein Beispiel für ein optisch wahrnehmbar wiedergegebenes digital gespeichertes Bild sowie für Bildbereiche.
- Figur 3: zeigt ein Beispiel für eine Darstellung eines Teils der digital gespeicherten Sicherheitsinformationen in Bildbereichen des digital gespeicherten Bildes.
- Figur 4: zeigt ein Beispiel für eine Darstellung eines Teils der digital gespeicherten Sicherheitsinformationen in einem Signaturbildbereich eines digital gespeicherten Bildes.
- Figur 5: zeigt ein Beispiel für eine Darstellung eines Teils der digital gespeicherten Sicherheitsinformationen in einem Informationsbildbereich.

### Detaillierte Figurenbeschreibung

Die Figuren werden im Folgenden genauer beschrieben. Sofern nicht explizit anders angegeben bezeichnen die in den Figuren wiederholt verwendeten Bezugszeichen jeweils identische oder wirkungsgleiche Vorrichtungselemente der jeweils gezeigten Gegenstände.

Figur 1 zeigt schematisch ein Beispiel für ein Bildwiedergabegerät 10, welches zum Beispiel ein Smartphone sein kann. Das gezeigte Bildwiedergabegerät 10 umfasst einen Speicher zur Speicherung eines digitalen Bildes mit einer digital codierten Sicherheitsinformation. Ferner umfasst das Bildwiedergabegerät eine Prozessoreinheit CPU.

Weiter weist das gezeigte Bildwiedergabegerät 10 ein berührungssensitives Anzeigeelement 12 ("Touchscreen") auf, dass zur optisch wahrnehmbaren Wiedergabe des digital gespeicherten Bildes sowie der digital codierten Sicherheitsinformation eingerichtet ist. Ferner umfasst das gezeigte Bildwiedergabegerät 10 auch Tastelemente, die mit der Prozessoreinheit CPU verbunden und dazu eingerichtet sind, ein von einem Bediener des Bildwiedergabegeräts veranlasstes Interaktionssignal an diese weiterzuleiten. Die Tastelemente sind im gezeigten Beispiel unterhalb des Anzeigeelements 12 angeordnet. Auch ist das berührungssensitive Anzeigeelement 12 dazu ausgebildet und eingerichtet, ein vom Bediener des Bildwiedergabegeräts veranlasstes Interaktionssignal an die Prozessoreinheit CPU weiterzuleiten.

Figur 1 zeigt schematisch ein Beispiel für eine optisch wahrnehmbare Darstellung eines digital gespeicherten Bildes, konkret das Porträt 22 einer Person sowie deren Unterschrift und Fingerabdrücke 26, durch das berührungssensitive Anzeigeelement 12 des Bildwiedergabegerätes 10. Weiter stellt das berührungssensitive Anzeigeelement 12 auch personenbezogene Informationen oder Sicherheitsdaten in einem Informationsbildbereich 24 optisch wahrnehmbar dar.

Soll die Integrität des dargestellten Personenporträts 22 überprüft werden, kann, zum Beispiel veranlasst durch eine vorbestimmte Geste des Bedieners des Bildwiedergabegeräts 10 auf/an dem berührungssensitiven Anzeigeelement 12 und/oder durch ein Betätigen eines der Tastelemente, ein Teil der digital codierten Sicherheitsinformation des gespeicherten Bildes innerhalb des Personenporträts 22 optisch wahrnehmbar dargestellt bzw. angezeigt werden.

Hierzu ermittelt die Prozessoreinheit CPU mehrere Bildbereiche des digital gespeicherten Bildes bzw. des Teils des Bildes, der dem Personenporträt 22 zugeordnet ist. Die Größe bzw. die Abmessungen der jeweiligen Bildbereiche können fest vorgegeben sein oder abhängig vom Grad einer Vergrößerung eines dargestellten Teils des digital gespeicherten Bildes durch die Prozessoreinheit CPU bestimmt werden. Optional kann der Bediener des Bildwiedergabegeräts 10 die Größe bzw. die Abmessungen der jeweiligen Bildbereiche auswählen oder beeinflussen.

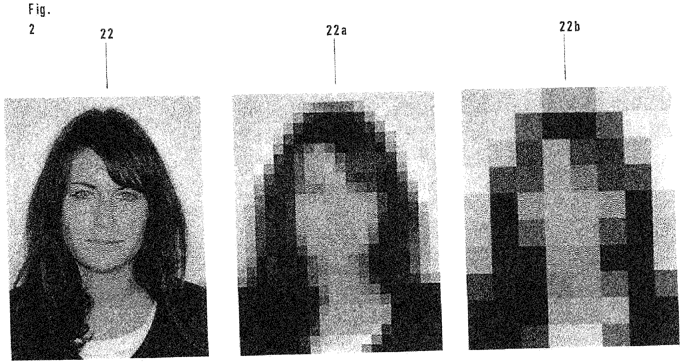

Figur 2 zeigt Beispiele 22a, 22b für die Zuordnung von Bildpunkten des Personenporträts 22 zu mehreren Bildbereichen.

Die Prozessoreinheit CPU ordnet die Bildpunkte des digital gespeicherten Bildes jeweils einem der Bildbereiche zu und ermittelt einen Farbmittelwert der dem Bildbereich zugeordneten Bildpunkte. Weiter ermittelt die Prozessoreinheit CPU jeweils zwei zueinander komplementäre Farbwerte für jeden Bildbereich, deren Farbmittelwert mit dem ermittelten Farbmittelwert der mit dem jeweiligen Bildbereich zugeordneten Bildpunkte zumindest annähernd identisch ist (+/- 1 ganzzahliger Farbwert auf der von dem Bildwiedergabegerät verwendeten Farbskala).

Anschließend veranlasst die Prozessoreinheit CPU die optisch wahrnehmbare Darstellung der jeweiligen Bildbereiche. Die dargestellten Bildbereiche werden jeweils mit einem ersten der jeweils ermittelten zueinander komplementären Farbwerte für die jeweiligen Bildbereiche dargestellt.

Figur 2 zeigt Beispiele 22a, 22b für die Zuordnung von Bildpunkten des Personenporträts 22 zu den jeweiligen Bildbereichen und die Anzeige der jeweiligen Bildbereiche mit dem ersten der jeweils ermittelten zueinander komplementären Farbwerte für die jeweiligen Bildbereiche.

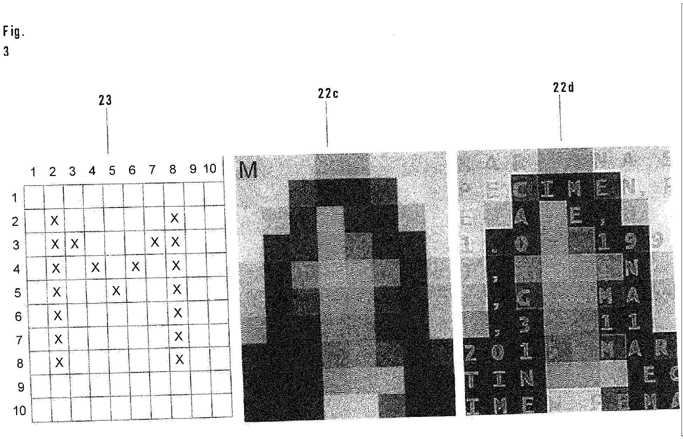

Figur 3 zeigt, wie ein Teil der digital codierten Sicherheitsinformation innerhalb eines oder mehrerer Bildbereiche dargestellt werden kann. Zum Beispiel kann ein Buchstabe, eine Ziffer, ein Piktogramm oder ein Symbolbild durch die CPU jeweils einem der Bildbereiche zugeordnet bzw. zugewiesen werden und innerhalb dieses Bildbereiches optisch wahrnehmbar angezeigt bzw. dargestellt werden. Hierzu können mehrere Bildpunkte eines Bildbereiches 23, zum Beispiel eines Bildbereiches von 10 x 10 Bildpunkten, zur Darstellung bzw. Anzeige verwendet werden.

Nachdem einem bestimmten Bildbereich ein Teil der digital codierten Sicherheitsinformation zugewiesen oder zugeordnet ist, wird der jeweils dargestellte Teil der digital codierten Sicherheitsinformation innerhalb des Bildbereichs mit dem jeweils zweiten der für die jeweiligen Bildbereiche ermittelten zueinander komplementären Farbwerte dargestellt. Hierdurch sind die dargestellten Teile der Sicherheitsinformationen gut erkennbar.

Figur 3 zeigt das Beispiel 22c für die Darstellung des Buchstabens "M" innerhalb eines Bildbereichs des Personenporträts 22, wobei der dargestellte Buchstabe "M", welcher ein Teil der digital codierten Sicherheitsinformation ist, mit einem gegenüber dem Bildbereich komplementären Farbwert dargestellt ist.

Ferner können, zum Beispiel anstelle geschlossener Buchstaben und/oder Ziffern und/oder Symbole wie 0, O, D, Q, Ö und/oder @, welche ein Teil der digital codierten Sicherheitsinformation sind, auch verkleinerte Abbilder des Personenporträts 22 in den Bildbereichen dargestellt werden. Das Beispiel 22d zeigt eine solche Darstellung eines Teils der digital codierten Sicherheitsinformation mit verkleinerten Abbildern des Personenporträts 22.

Durch die, insbesondere bedienerveranlasste, Darstellung der digital codierten Sicherheitsinformation eines digital gespeicherten Bildes kann ohne externe Auslesegeräte und/oder Netzwerkanbindung überprüft werden, ob das mit dem Bildwiedergabegerät 10 dargestellte Personenporträt authentisch ist oder ob es sich um eine Fälschung, insbesondere um eine Bildkopie handelt. Der dargestellte Teil der digital codierten Sicherheitsinformationen kann zum Beispiel einen Name, eine Adresse, ein Geburtsdatum oder andere personenbezogene Informationen oder Merkmale für einen Bediener oder Betrachter des dargestellten Bildes wiedergeben.

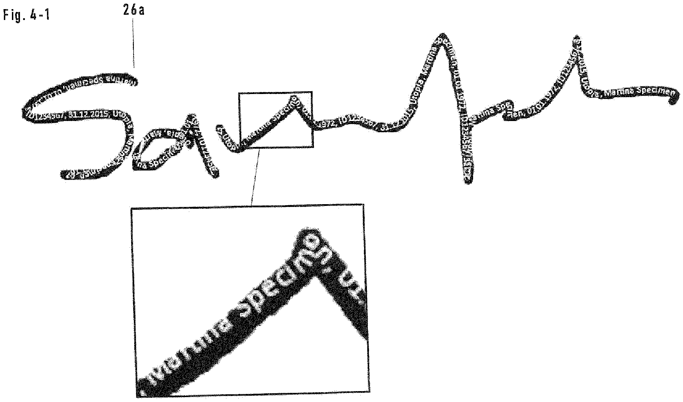

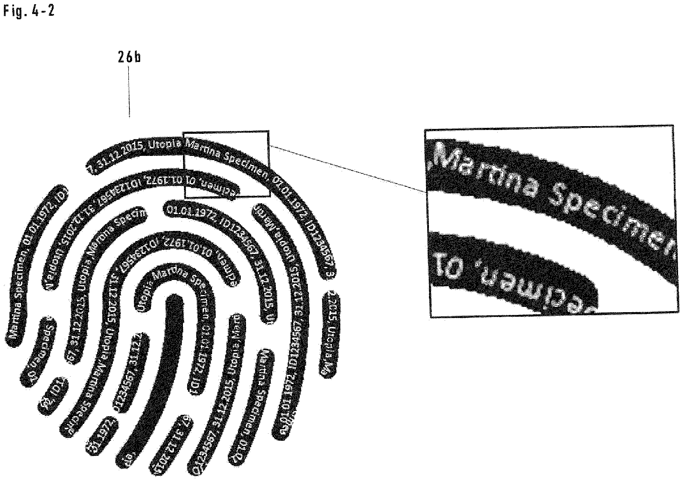

Figur 4 zeigt ein Beispiel für die Darstellung eines Teils der digital codierten Sicherheitsinformation in einem Signaturbildbereich des mit dem Bildwiedergabegerät 10 dargestellten digitalen Bildes.

Soll die Integrität einer dargestellten Signatur- oder Fingerabdrucklinie 26 überprüft werden, kann, zum Beispiel ebenfalls veranlasst durch eine vorbestimmte Geste des Bedieners des Bildwiedergabegerät 10 auf/an dem berührungssensitiven Anzeigeelement 12 und oder durch ein Betätigen eines der Tastelemente, ein Teil der digital codierten Sicherheitsinformation des gespeicherten Bildes innerhalb des Signaturbildbereichs optisch wahrnehmbar dargestellt bzw. angezeigt werden.

Hierzu ermittelt die Prozessoreinheit CPU einen Verlauf der Signatur- oder Fingerabdrucklinie 26 und veranlasst die Darstellung eines Teils der digital codierten Sicherheitsinformation, zum Beispiel einer Folge von Buchstaben und/oder Ziffern, welche dem Verlauf der Signatur- oder Fingerabdrucklinie 26 folgend und/oder zumindest teilweise überlagernd angeordnet werden können.

In dem in Figur 4 gezeigten Beispiel wird jeweils dem Verlauf einer Signaturlinie 26a folgend ein Teil der digital codierten Sicherheitsinformation dargestellt bzw. angezeigt, wobei die Sicherheitsinformation mit einem zum Farbwert der Signaturlinie komplementären Farbwert dargestellt/angezeigt wird. Der dargestellte Teil der Sicherheitsinformation überlagert die dargestellte Signaturlinie 26a hierbei teilweise.

Weiter zeigt Figur 4 ein Beispiel für einen dargestellten Teil der digital codierten Sicherheitsinformation, welcher dem Verlauf einer Fingerabdrucklinie 26b folgend dargestellt/angezeigt wird und die dargestellte Fingerabdrucklinie 26b hierbei teilweise überlagert. Der Teil der Sicherheitsinformation wird im gezeigten Beispiel mit einem Farbwert, der komplementär zum Farbwert der Fingerabdrucklinie 26b ist, dargestellt/angezeigt.

Analog zur Darstellung eines Teils der Sicherheitsinformation in den Bildbereichen des Personenporträts 22 kann der im Signaturbildbereich des digital gespeicherten Bildes angezeigte Teil der Sicherheitsinformation personenbezogene Informationen oder Merkmale wiedergeben.

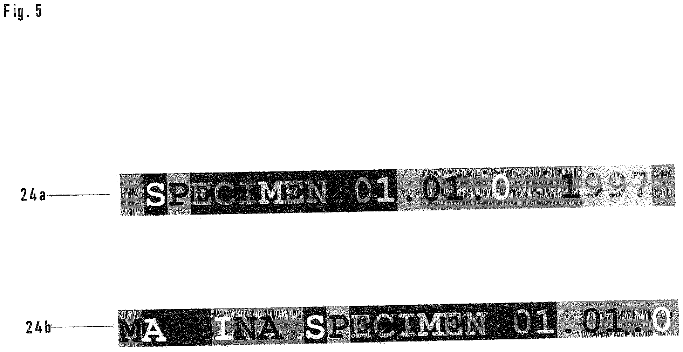

Figur 5 zeigt ein Beispiel für die Darstellung eines Teils der digital codierten Sicherheitsinformationen in einem von dem Bildwiedergabegerät 10 dargestellten bzw. angezeigten Informationsbildbereich 24. In diesem Informationsbildbereich wird zeitabhängig veränderlich jeweils ein Teil der digital codierten Sicherheitsinformation für einen Bediener oder Betrachter des Bildwiedergabegeräts 10 optisch wahrnehmbar angezeigt/dargestellt. Im gezeigten Beispiel wird zumindest ein Teil der digital codierten Sicherheitsinformation als quasi-endlos umlaufende Folge von Ziffern und Buchstaben dargestellt, wobei die Ziffern und Buchstaben kontinuierlich oder taktweise von links nach rechts (vom Betrachter des Bildwiedergabegeräts 10 aus gesehen) durch den Informationsbildbereich 24a, 24b beweglich bzw. umlaufend dargestellt werden.

Die Farbwerte der dargestellten Buchstaben und Ziffern sind zueinander teilweise unterschiedlich und werden ebenfalls kontinuierlich, taktweise und/oder positionsabhängig verändert. Ebenso weist ein Hintergrundbildbereich des Informationsbildbereichs voneinander verschiedene Farbwerte auf, welche zeitabhängig, zum Beispiel synchron oder asynchron zu einer Änderung der Farbwerte der dargestellten Buchstaben und Ziffern, und/oder positionsabhängig verändert werden können. Optional können die Farbwerte des Hintergrundbildbereichs jeweils komplementär zu Farbwerten der dargestellten Ziffern und Buchstaben sein, die innerhalb des Informationsbildbereichs dargestellt werden.

Optional kann die Darstellung von Buchstaben, Zeichen, Piktogrammen, Symbolen und/oder Bildern analog zum Informationsbildbereich 24 auch im Signaturbildbereich 26 und/oder in zumindest einem oder mehreren Bildbereichen zeitabhängig und/oder bedienerveranlasst verändert werden. Ferner kann vorgesehen sein, dass für den Signaturbildbereich 26 und/oder für zumindest einen oder mehrere Bildbereiche eine zeitabhängige und/oder bedienerveranlasste Änderung eines Hintergrundfarbwertes möglich oder nicht möglich ist.

In einer Variante kann die digital codierte Sicherheitsinformation des digital gespeicherten Bildes eine Datums und/oder Zeitinformation umfassen, welche in den Bildbereichen und/oder in dem Signaturbildbereich und/oder in dem Informationsbildbereich dargestellt bzw. angezeigt werden kann. Ein Vorteil hierbei ist, dass eine durch Abfilmen oder eine auf sonstige unbefugte Weise reproduzierte Wiedergabe einer in der Vergangenheit dargestellten digital codierten Sicherheitsinformation leicht identifizierbar ist.

Es versteht sich, dass die zuvor erläuterten beispielhaften Ausführungsformen nicht abschließend sind und den hier offenbarten Gegenstand nicht beschränken. Insbesondere ist für den Fachmann ersichtlich, dass er die beschriebenen Merkmale beliebig miteinander kombinieren kann und/oder verschiedene Merkmale weglassen kann, ohne dabei von dem hier offenbarten Gegenstand abzuweichen.

## Patentansprüche

1. Ein Verfahren zur Sichtbarmachung von Sicherheitsinformationen eines digital gespeicherten Bildes (22), welches mehrere Bildpunkte und zumindest eine digital codierte Sicherheitsinformation aufweist, mit den Schritten:
Zuordnen zumindest eines Teils der Bildpunkte zu zumindest einem Bildbereich;
Ermitteln eines Farbmittelwertes der dem Bildbereich zugeordneten Bildpunkte;
Ermitteln von zwei zueinander komplementären Farbwerten, deren Farbmittelwert mit dem ermittelten Farbmittelwert der dem Bildbereich zugeordneten Bildpunkte zumindest annähernd identisch ist;
Optisch wahrnehmbares Darstellen des Bildbereichs und zumindest eines Teils der digital codierten Sicherheitsinformation, wobei
der dargestellte Bildbereich einen ersten der zueinander komplementären Farbwerte aufweist, und
der Teil der digital codierten Sicherheitsinformation innerhalb des Bildbereichs dargestellt wird und einen zweiten der zueinander komplementären Farbwerte aufweist.

2. Ein Verfahren nach dem Anspruch 1, weiter umfassend zumindest einen der Schritte:
Optisch wahrnehmbares Darstellen des digital gespeicherten Bildes (22) mit einem Bildwiedergabegerät (10);
Veranlassen der Sichtbarmachung von Sicherheitsinformationen durch einen Bediener des Bildwiedergabegerätes mittels einer Interaktion des Bedieners mit dem Bildwiedergabegerät;
Vergrößertes Darstellen eines Teils des digital gespeicherten Bildes.

3. Ein Verfahren nach einem der vorangegangenen Ansprüche, wobei
zumindest ein Teil der digital codierten Sicherheitsinformation als optisch wahrnehmbarer Buchstabe und/oder als optisch wahrnehmbare Ziffer dargestellt wird, und/oder
zumindest ein Teil der digital codierten Sicherheitsinformation als optisch wahrnehmbares Symbolbild und/oder als optisch wahrnehmbares Piktogramm dargestellt wird.

4. Ein Verfahren nach einem der vorangegangenen Ansprüche, wobei
jeweils 10, 100 oder 1000 Bildpunkte einem Bildbereich zugeordnet werden, und/oder
einem oder mehreren Bildbereichen jeweils ein Vielfaches von 10 Bildpunkten zugeordnet werden, und/oder
zumindest ein Teil der Bildbereiche eine Längenausdehnung aufweist, die jeweils zumindest annähernd identisch mit der Breitenausdehnung der jeweiligen Bildbereiche ist, und/oder
jeder Bildpunkt des digital gespeicherten Bildes zumindest einem Bildbereich zugeordnet wird.

5. Ein Verfahren nach einem der vorangegangenen Ansprüche, weiter umfassend zumindest einen der Schritte:
Zuordnen zumindest eines Teils der Bildpunkte zu einem Signaturbildbereich;
Ermitteln eines Signatur- oder Linienverlaufs innerhalb des Signaturbildbereichs;
Optisch wahrnehmbares Darstellen des Signaturbildbereichs und zumindest eines Teils der digital codierten Sicherheitsinformation innerhalb des Signaturbildbereichs, wobei
der innerhalb des Signaturbildbereichs dargestellte Teil der digital codierten Sicherheitsinformation mehrere optisch wahrnehmbare Buchstaben und/oder Ziffern und/oder Piktogramme und/oder Symbolbilder aufweist, und
die mehreren optisch wahrnehmbaren Buchstaben und/oder Ziffern und/oder Piktogramme und/oder Symbolbilder innerhalb des Signaturbildbereichs dem Signatur- oder Linienverlauf folgend angeordnet werden.

6. Ein Verfahren nach dem vorangegangenen Anspruch, wobei
das Zuordnen der Bildpunkte zu dem Signaturbildbereich eine Kontrastanalyse des digital gespeicherten Bildes umfasst, und/oder
das Ermitteln des Signatur- oder Linienverlaufs eine Kontrastanalyse des Signaturbildbereichs umfasst, und/oder
der innerhalb des Signaturbildbereichs dargestellte Teil der Sicherheitsinformation eine innerhalb des Signaturbildbereichs dargestellte Signatur und/oder Fingerabdruckdarstellung überlagert, und/oder
der innerhalb des Signaturbildbereichs dargestellte Teil der Sicherheitsinformation einen Farbwert aufweist, der komplementär zu einem Farbwert einer innerhalb des Signaturbildbereichs dargestellten Signatur und/oder Fingerabdruckdarstellung ist.

7. Ein Verfahren nach einem der vorangegangenen Ansprüche, wobei
zumindest ein Teil der digital codierten Sicherheitsinformation in einem Informationsbildbereich angezeigt wird, wobei
der innerhalb des Informationsbildbereichs dargestellte Teil der digital codierten Sicherheitsinformation mehrere optisch wahrnehmbare Buchstaben und/oder Ziffern und/oder Piktogramme und/oder Symbolbilder aufweist.

8. Ein Verfahren nach dem vorangegangenen Anspruch, wobei
der Informationsbildbereich und/oder der innerhalb des Informationsbildbereichs dargestellte Teil der digital codierten Sicherheitsinformation mehrere Farbwerte, insbesondere zueinander paarweise komplementäre Farbwerte, aufweist, und/oder
der innerhalb des Informationsbildbereichs dargestellte Teil der digital codierten Sicherheitsinformation zeitabhängig und/oder bedienerveranlasst verändert wird, und/oder
die Farbwerte des Informationsbildbereichs und/oder des innerhalb des Informationsbildbereichs dargestellten Teils der digital codierten Sicherheitsinformation zeitabhängig und/oder bedienerveranlasst verändert werden.

9. Ein Verfahren nach einem der vorangegangenen Ansprüche, wobei
die digital codierte Sicherheitsinformation, insbesondere der in dem zumindest einen Bildbereich und/oder der in dem Signaturbildbereich und/oder der in dem Informationsbildbereich dargestellte Teil der Sicherheitsinformation, eine Zeitinformation umfasst.

10. Ein Bildwiedergabegerät (10), welches dazu ausgebildet und eingerichtet ist,
ein digital gespeichertes Bild (22), welches mehrere Bildpunkte und zumindest eine digital codierte Sicherheitsinformation aufweist, für einen Bediener optisch wahrnehmbar darzustellen, und
zumindest einen Teil der digital codierten Sicherheitsinformation mit einem Verfahren nach einem der vorangegangenen Ansprüche für einen Bediener optisch wahrnehmbar wiederzugeben.

## Claims

1. A method for visualizing security information of a digitally stored image (22) comprising a plurality of pixels and at least one digitally encoded security information, comprising the steps of:
Assigning at least some of the pixels to at least one image area;
Determining an average colour value of the pixels assigned to the image area;
Determining two mutually complementary colour values whose mean colour value is at least approximately identical to the determined mean colour value of the pixels assigned to the image area;
Representing, visually perceptibly, the image area and at least part of the digitally encoded security information, wherein
the displayed image area has a first of the complementary colour values, and
the part of the digitally encoded security information is displayed within the image area and has a second of the colour values complementary to each other.

2. A method according to claim 1, further comprising at least one of the steps of:
Visually perceptible display of the digitally stored image (22) with an image display device (10);
Initiating the visualization of security information by an operator of the image display device by means of an interaction of the operator with the image display device;
enlarged display of a part of the digitally stored image.

3. A method according to any one of the preceding claims, wherein
at least part of the digitally encoded security information is represented as an optically perceptible letter and/or as an optically perceptible digit, and/or
at least part of the digitally coded security information is displayed as a visually perceptible symbol image and/or as a visually perceptible pictogram.

4. A method according to any one of the preceding claims, wherein
10, 100 or 1000 pixels are assigned to an image area, and/or
one or more image areas are each assigned a multiple of 10 pixels, and/or
at least some of the image areas have a length which is at least approximately identical to the width of the respective image areas, and/or
each pixel of the digitally stored image is assigned to at least one image area.

5. A method according to any one of the preceding claims, further comprising at least one of the steps of:
Assigning at least some of the pixels to a signature image area;
Determining a signature or line progression within the signature image area;
Visually perceptible representation of the signature image area and at least part of the digitally encoded security information within the signature image area, wherein
the part of the digitally encoded security information displayed within the signature image area comprises a plurality of optically perceptible letters and/or digits and/or pictograms and/or symbol images, and
the multiple visually perceptible letters and/or numbers and/or pictograms and/or symbol images are arranged within the signature image area following the signature or line path.

6. A method according to the preceding claim, wherein
the assignment of the pixels to the signature image area comprises a contrast analysis of the digitally stored image, and/or
the determination of the signature or line progression comprises a contrast analysis of the signature image area, and/or
the part of the security information displayed within the signature image area is superimposed on a signature and/or fingerprint representation displayed within the signature image area, and/or
the part of the security information displayed within the signature image area has a colour value that is complementary to a colour value of a signature and/or fingerprint representation displayed within the signature image area.

7. A method according to any one of the preceding claims, wherein
at least part of the digitally encoded security information is displayed in an information image area, wherein
the part of the digitally encoded security information displayed within the information image area has several optically perceptible letters and/or digits and/or pictograms and/or symbol images.

8. A method according to the preceding claim, wherein
the information image area and/or the part of the digitally encoded security information displayed within the information image area has several colour values, in particular colour values that complement each other in pairs, and/or
the part of the digitally encoded security information displayed within the information image area is changed in a time-dependent and/or user-initiated manner, and/or
the colour values of the information image area and/or the part of the digitally coded security information displayed within the information image area are changed in a time-dependent and/or user-initiated manner.

9. A method according to any one of the preceding claims, wherein
the digitally encoded security information, in particular the part of the security information represented in the at least one image area and/or the part of the security information represented in the signature image area and/or the part of the security information represented in the information image area, comprises time information.

10. An image reproducing apparatus (10) formed and arranged for this purpose,
to display a digitally stored image (22), which has a plurality of pixels and at least one digitally coded security information item, in a manner which can be optically perceived by an operator, and
to reproduce at least a part of the digitally encoded security information with a method according to one of the preceding claims so as to be optically perceptible to an operator.

## Revendications

1. Un procédé pour rendre visibles des informations de sécurité d'une image (22)
enregistrée numériquement, qui présente plusieurs points d'image et au moins une information de sécurité codée numériquement, comprenant les étapes suivantes:
l'affectation d'au moins une partie des pixels à au moins une zone d'image;
Détermination d'une valeur moyenne de couleur des pixels associés à la zone d'image;
Détermination de deux valeurs chromatiques complémentaires l'une de l'autre, dont la valeur chromatique moyenne est au moins approximativement identique à la valeur chromatique moyenne déterminée des points d'image associés à la zone d'image;
Représentation optiquement perceptible de la zone d'image et d'au moins une partie des informations de sécurité codées numériquement, dans laquelle
la zone d'image représentée présente une première des valeurs de couleur mutuellement complémentaires, et
la partie de l'information de sécurité codée numériquement est représentée à l'intérieur de la zone d'image et présente une deuxième des valeurs de couleur mutuellement complémentaires.

2. Un procédé selon la revendication 1, comprenant en outre au moins une des étapes suivantes:
Affichage optiquement perceptible de l'image numériquement enregistrée (22) avec un appareil de reproduction d'images (10);
faire en sorte qu'un opérateur de l'appareil de reproduction d'images visualise des informations de sécurité au moyen d'une interaction de l'opérateur avec l'appareil de reproduction d'images;
Affichage agrandi d'une partie de l'image enregistrée numériquement.

3. Un procédé selon l'une quelconque des revendications précédentes, dans lequel
au moins une partie des informations de sécurité codées numériquement est représentée sous la forme d'une lettre optiquement perceptible et/ou d'un chiffre optiquement perceptible, et/ou
au moins une partie de l'information de sécurité codée numériquement est représentée sous la forme d'une image symbolique visuellement perceptible et/ou d'un pictogramme visuellement perceptible.

4. Un procédé selon l'une quelconque des revendications précédentes, dans lequel
10, 100 ou 1000 pixels sont respectivement attribués à une zone d'image, et/ou
un multiple de 10 pixels est attribué à une ou plusieurs zones d'image, et/ou
au moins une partie des zones d'image présente une extension en longueur qui est respectivement au moins approximativement identique à l'extension en largeur des zones d'image respectives, et/ou
chaque pixel de l'image enregistrée numériquement est associé à au moins une zone d'image.

5. Un procédé selon l'une quelconque des revendications précédentes, comprenant en outre au moins une des étapes:
l'attribution d'au moins une partie des pixels à une zone d'image de signature;
Déterminer un tracé de signature ou de ligne à l'intérieur de la zone de l'image de signature;
Représentation optiquement perceptible de la zone d'image de signature et d'au moins une partie des informations de sécurité codées numériquement à l'intérieur de la zone d'image de signature, dans laquelle
la partie de l'information de sécurité codée numériquement représentée à l'intérieur de la zone d'image de signature comprend plusieurs lettres et/ou chiffres et/ou pictogrammes et/ou images de symboles perceptibles optiquement, et
les multiples lettres et/ou chiffres et/ou pictogrammes et/ou images de symboles visuellement perceptibles sont disposés à l'intérieur de la zone d'image de signature en suivant le tracé de la signature ou de la ligne.

6. Un procédé selon la revendication précédente, dans lequel
l'attribution des pixels à la zone d'image de signature comprend une analyse de contraste de l'image stockée numériquement, et/ou
la détermination du tracé de la signature ou de la ligne comprend une analyse de contraste de la zone de l'image de la signature, et/ou
la partie des informations de sécurité représentée à l'intérieur de la zone d'image de signature se superpose à une signature et/ou à une représentation d'empreinte digitale représentée à l'intérieur de la zone d'image de signature, et/ou
la partie des informations de sécurité représentée à l'intérieur de la zone d'image de signature a une valeur de couleur qui est complémentaire à une valeur de couleur d'une signature et/ou d'une représentation d'empreinte digitale représentée à l'intérieur de la zone d'image de signature.

7. Un procédé selon l'une quelconque des revendications précédentes, dans lequel
au moins une partie des informations de sécurité codées numériquement est affichée dans une zone d'image d'informations, dans laquelle
la partie de l'information de sécurité codée numériquement représentée à l'intérieur de la zone d'image d'information présente plusieurs lettres et/ou chiffres et/ou pictogrammes et/ou images de symboles perceptibles optiquement.

8. Un procédé selon la revendication précédente, dans lequel
la zone d'image d'information et/ou la partie de l'information de sécurité codée numériquement représentée à l'intérieur de la zone d'image d'information présente plusieurs valeurs de couleur, en particulier des valeurs de couleur complémentaires entre elles par paires, et/ou
la partie de l'information de sécurité codée numériquement représentée à l'intérieur de la zone d'image d'information est modifiée en fonction du temps et/ou par l'utilisateur, et/ou
les valeurs de couleur de la zone d'image d'information et/ou de la partie de l'information de sécurité codée numériquement représentée à l'intérieur de la zone d'image d'information sont modifiées en fonction du temps et/ou sous l'impulsion de l'utilisateur.

9. Un procédé selon l'une quelconque des revendications précédentes, dans lequel
l'information de sécurité codée numériquement, en particulier la partie de l'information de sécurité représentée dans la au moins une zone d'image et/ou la partie de l'information de sécurité représentée dans la zone d'image de signature et/ou la partie de l'information de sécurité représentée dans la zone d'image d'information, comprend une information temporelle.

10. Un appareil de reproduction d'images (10) qui est conçu et agencé à cet effet,
à représenter de manière optiquement perceptible pour un opérateur une image (22) enregistrée numériquement, qui comporte plusieurs points d'image et au moins une information de sécurité codée numériquement, et
reproduire au moins une partie de l'information de sécurité codée numériquement avec un procédé selon l'une des revendications précédentes de manière à ce qu'elle soit visuellement perceptible par un opérateur.
